**Europäisches Patentamt**

**European Patent Office**

**Office européen des brevets**

(19)

(11) Veröffentlichungsnummer: **0 040 737**
**B1**

(12) **EUROPÄISCHE PATENTSCHRIFT**

(45) Veröffentlichungstag der Patentschrift:
27.07.83

(51) Int. Cl.³: **F 16 K 31/122,** F 15 B 15/18,
F 15 B 13/00, F 01 D 17/10

(21) Anmeldenummer: 81103530.2

(22) Anmeldetag: 08.05.81

(54) **Elektrohydraulischer Stellantrieb für Turbinenventile.**

(30) Priorität: 22.05.80 DE 3019626

(43) Veröffentlichungstag der Anmeldung:
02.12.81 Patentblatt 81/48

(45) Bekanntmachung des Hinweises auf die Patenterteilung:
27.07.83 Patentblatt 83/30

(84) Benannte Vertragsstaaten:
AT CH FR IT LI

(56) Entgegenhaltungen:
DE-A-2 432 835
FR-A-2 105 269
FR-A-2 229 879
FR-A-2 296 784
GB-A-822 164

(73) Patentinhaber: **KRAFTWERK UNION
AKTIENGESELLSCHAFT, Wiesenstrasse 35,
D-4330 Mülheim (Ruhr) (DE)**

(72) Erfinder: **Leupers, Hans-Joachim, Am Eckland 8,
D-4330 Mülheim (Ruhr) (DE)**

(74) Vertreter: **Mehl, Ernst, Dipl.-Ing. et al, Postfach 22 01 76,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Elektrohydraulischer Stellantrieb für Turbinenventile

Die Erfindung bezieht sich auf einen elektrohydraulischen Stellantrieb für Turbinenventile, insbesondere für Regel-Schnellschluß- und Umleitventile von Dampfturbinen, mit einer elektrischen Ansteuerung, einem elektro-hydraulischen Umformer, einem hydraulischen Stellzylinder, dessen Stellkolben mit der Ventilspindel verbunden und in Schließrichtung durch die Federkraft einer Kraftspeicherfeder belastet ist und mit einem hydraulischen Versorgungssystem, welches eine aus einem Hydraulikflüssigkeitsbehälter gespeiste und von einem Elektromotor angetriebene Flüssigkeitspumpe und einen druckseitig an die Flüssigkeitspumpe angeschlossenen hydraulischen Druckspeicher umfaßt.

Ein ähnlicher elektrohydraulischer Stellantrieb für das Regelventil einer Dampfturbine ist aus der DE-A-2 842 846 bereits bekannt. Der dort dargestellte Stellantrieb wird durch die Regelsignale bzw. Schnellschlußsignale einer elektrischen Turbinenregelung angesteuert, wobei diese elektrischen Signale in dem elektro-hydraulischen Umformer in hydraulische Signale umgewandelt und derart hydraulisch verstärkt werden, daß mit Hilfe des hydraulischen Stellzylinders die für die Steuerung des Regelventils erforderlichen großen Stellkräfte aufgebracht werden können. Das hydraulische Versorgungssystem ist bis auf einen hydraulischen Druckspeicher nicht näher dargestellt oder beschrieben.

Ferner ist ein elektro-hydraulischer Stellantrieb mit integriertem hydraulischem Versorgungssystem aus der FR-A-2 105 269 bekannt, welcher auch zur Ventilbetätigung verwendet werden kann.

Im Turbinenbau erfolgt die Versorgung der Stellantriebe der einzelnen Turbinenventile mit hydraulischer Energie stets über ein zentrales hydraulisches Versorgungssystem, welches einen zentralen Hydraulikflüssigkeitsbehälter und meistens mehrere gegen hydraulische Druckspeicher arbeitende Flüssigkeitspumpen umfaßt. Für die Verbindung eines Stellantriebes mit dem zentralen hydraulischen Versorgungssystem sind also mindestens zwei Rohrleitungen erforderlich, wobei eine Rohrleitung die unter hohem Druck stehende Hydraulikflüssigkeit zuführt und die andere Rohrleitung die bei einer Entlastung der hydraulischen Bauteile ablaufende Hydraulikflüssigkeit in den zentralen Hydraulikflüssigkeitsbehälter zurückführt. Um die Übertragungssicherheit der hydraulischen Energie zu gewährleisten, erfordern diese Rohrleitungen einen erheblichen Aufwand für Konstruktion, Qualitätsicherung und Wartung. Außer Druckspitzen und Schwingungen in langen Leitungen ist insbesondere auch die Beanspruchung durch Wärmedehnungen zu berücksichtigen. Schließlich ist auch noch die von einem Bruch der Leitungen im Warmbereich ausgehende Brandgefahr zu berücksichtigen. In diesem Zusammenhang werden im Hinblick auf den Brandschutz schwer brennbare Hydraulikflüssigkeiten eingesetzt. Derartige schwer brennbare Hydraulikflüssigkeiten sind jedoch kostspielig und erfordern aufgrund ihrer geringen Stabilität gegenüber Hydraulikflüssigkeiten auf Mineralölbasis aufwendige Pflegemaßnahmen. Auch der im Interesse des Brandschutzes erfolgende Einsatz doppelwandiger Rohre bringt hinsichtlich Verlegung und Zugänglichkeit erhebliche Probleme mit sich.

Der Erfindung liegt daher die Aufgabe zugrunde, einen Stellantrieb für Turbinenventile zu schaffen, welcher einerseits den hohen Anforderungen hinsichtlich Stellkraft und Stellgeschwindigkeit genügt und andererseits die mit der Übertragung hydraulischer Energie zusammenhängenden Probleme durch eine Integration des hydraulischen Versorgungssystems in den Stellantrieb vermeidet.

Diese Aufgabe wird bei einem elektrohydraulischen Stellantrieb der eingangs genannten Art erfindungsgemäß dadurch gelöst, daß der elektro-hydraulische Umformer, der hydraulische Stellzylinder und das hydraulische Versorgungssystem an einer am Ventilgehäuse angeordneten Tragkonstruktion befestigt sind, daß die Tragkonstruktion zwei parallel angeordnete und die Kraftspeicherfeder zwischen sich aufnehmende Tragplatten umfaßt und daß die an den Tragplatten befestigten Bauelemente zumindest teilweise durch in die Tragplatten eingebrachte Kanäle verbunden sind. Durch die Integration des hydraulischen Versorgungssystems in den Stellantrieb können die bisher erforderlichen Hydraulikzuleitungen und der mit diesen Leitungen verbundene Aufwand entfallen. Für die Energieversorgung des Stellantriebes und für die Zuleitung der Regelsignale bzw. Schnellschlußsignale sind nur noch Kabel erforderlich, welche im Hinblick auf die Übertragungssicherheit oder den Brandschutz keinerlei Probleme aufwerfen. Die Integration des hydraulischen Versorgungssystems in den Stellantrieb, welcher unter beengten Platzverhältnissen am Ventilgehäuse angeordnet werden soll, wird durch die spezielle Ausgestaltung der Tragkonstruktion ermöglicht. Die Tragplatten der Tragkonstruktion haben eine tragende und zugleich eine verbindende Funktion, so daß Verbindungsleitungen zwischen den an den Tragplatten befestigten Bauelementen weitgehend entfallen können. Auf diese Weise kann das Bauvolumen des als kompakter Antriebsblock ausgebildeten Stellantriebes sehr klein gehalten werden.

Bei einer bevorzugten Ausführungsform des erfindungsgemäßen Stellantriebes ist vorgesehen, daß die Tragkonstruktion zusätzlich eine stirnseitig an den Tragplatten befestigte Stirnplatte umfaßt und daß in die Stirnplatte ein Querverbindungskanal eingebracht ist. Durch eine derartige Stirnplatte wird einerseits eine zusätzliche Fläche für die Befestigung von Bauelementen geschaffen und andererseits eine hydraulische Querverbindung zwischen den beiden Tragplatten und den daran befestigten Bauelementen ermöglicht. Vorzugsweise ist hierbei an den seitlich über die Tragplatten hinausragenden Bereichen der Stirnplatte jeweils eine von einem Elektromotor angetriebene Flüssigkeitspumpe befestigt. Hierdurch wird die Betriebssicherheit des Stellantriebes wesentlich erhöht, da bei Ausfall einer der beiden Flüssigkeitspumpen die andere zugeschaltet werden kann. Eine besonders günstige räumliche Anordnung ergibt sich, wenn die beiden Flüssigkeitspumpen an der den Tragplatten zugewandten Seite der Stirnplatte befestigt sind und die Elektromotoren an der den Tragplatten abgewandten Seite der Stirnplatte befestigt sind. Hierdurch ergeben sich äußerst kurze Verbindungswege zwischen der Flüssigkeitspumpe und den Tragplatten bzw. den an den Tragplatten befestigten Bauelementen.

Bei einer weiteren Ausgestaltung des erfindungsgemäßen Stellantriebs ist vorgesehen, daß der Hydraulikflüssigkeitsbehälter an den der Stirnplatte gegenüberliegenden Stirnseiten der Tragplatten angebracht ist. Durch diese Anordnung des relativ groß auszuführenden Hydraulikflüssigkeitsbehälters wird der für die Unterbringung der übrigen Bauelemente an den Tragplatten und der Stirnplatte zur Verfügung stehende Raum praktisch nicht eingeschränkt.

Eine weitere Erhöhung der Betriebssicherheit des Stellantriebs kann dadurch erzielt werden, daß auf der der Stirnplatte zugewandten Seite an jeder Tragplatte mindestens ein hydraulischer Druckspeicher befestigt ist. Das Speichervolumen der Druckspeicher kann dann so bemessen werden, daß auch bei Ausfall eines Druckspeichers eine für die Betätigung des hydraulischen Stellzylinders ausreichende Hydraulikflüssigkeitsmenge verfügbar ist.

Ist die Tragkonstruktion über ein Säulengestell mit dem Ventilgehäuse verbunden, so kann bei einem Zusammenfall der Eigenfrequenz des Stellantriebs und der Erregerfrequenz des Turbinenventils eine leichte Änderung durchgeführt werden.

Anhand der Zeichnung sind Aufbau und Wirkungsweise eines Ausführungsbeispiels nach der Erfindung näher erläutert. Dabei zeigt

Fig. 1 das Funktionsschema eines Stellantriebes mit einem integrierten hydraulischen Versorgungssystem,

Fig. 2 einen Längsschnitt durch einen elektrohydraulischen Stellantrieb für das Regelventil einer Dampfturbine,

Fig. 3 einen Schnitt gemäß der Linie III-III der Fig. 2 und

Fig. 4 einen Schnitt gemäß der Linie IV-IV der Fig. 2.

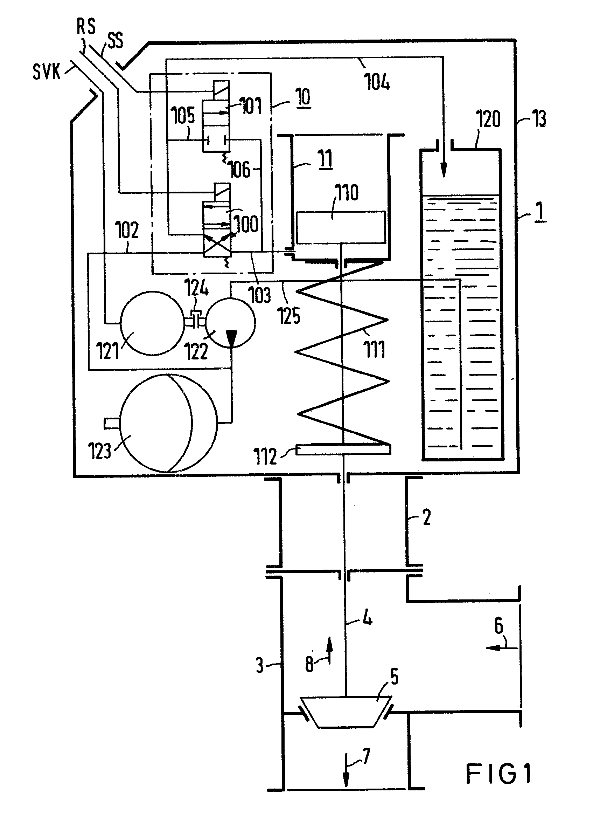

Fig. 1 zeigt einen insgesamt mit 1 bezeichneten elektro-hydraulischen Stellantrieb, welcher über ein Zwischengestell 2 mit einem Turbinenventil 3 zusammengebaut ist. Die Betätigung des Turbinenventils 3 durch den elektro-hydraulischen Stellantrieb 1 erfolgt über eine Verbindungsstange 4, an deren unterem Ende der in Schließstellung gezeichnete Ventilkegel 5 befestigt ist. Der durch die Pfeile 6 und 7 angedeutete Durchfluß durch das Turbinenventil 3 wird durch einen entsprechenden Hub der Verbindungsstange 4 in der durch einen Pfeil 8 angedeuteten Öffnungsrichtung eingestellt.

Der elektrohydraulische Stellantrieb 1 besteht im wesentlichen aus einem elektro-hydraulischen Umformer 10, einem hydraulischen Stellzylinder 11 und einem hydraulischen Versorgungssystem, welches eine aus einem Hydraulikflüssigkeitsbehälter 120 gespeiste und von einem Elektromotor 121 angetriebene Flüssigkeitspumpe 122 und einen druckseitig an die Flüssigkeitspumpe angeschlossenen hydraulischen Druckspeicher 123 umfaßt. Sämtliche vorstehend aufgeführten Bauteile sind zu einem kompakten, am Turbinenventil 3 angeordneten Antriebsblock integriert, wobei diese Integration der Bauteile in der schematischen Zeichnung durch ein gemeinsames Antriebsgehäuse 13 angedeutet ist.

Der elektro-hydraulische Umformer hat die Aufgabe, die von einer Turbinenregelung erzeugten elektrischen Signale in hydraulische Signale umzuwandeln. Hierzu sind bei dem dargestellten Ausführungsbeispiel ein von einem elektrischen Regelsignal RS angesteuertes Zweiwegeventil 100 und ein von einem elektrischen Schnellschlußsignal SS angesteuertes Einwegeventil 101 vorgesehen. Der erste Eingang des Zweiwegeventils 100 ist über eine Leitung 102 an den druckseitigen Ausgang der Flüssigkeitspumpe 122 und den hydraulischen Druckspeicher 123 angeschlossen. Der zweite Eingang des Zweiwegeventils 100 ist über eine Leitung 103 mit dem hydraulischen Stellzylinder 11 verbunden, während der dritte Eingang über eine Abflußleitung 104 an den Hydraulikflüssigkeitsbehälter 120 angeschlossen ist. Der erste Eingang des Einwegeventils 101 ist über eine Zweigleitung 105 an die Abflußleitung 104 und der zweite Eingang über eine Zweigleitung 106 an die Leitung 103 zum hydraulischen Stellzylinder 11 angeschlossen. Zum Öffnen des Turbinenventils 3 wird durch ein entsprechendes Regelsignal RS das Zweiwegeventil 100 so geschaltet, daß der Raum des hydraulischen Stellzylinders 11 unterhalb eines Stellkolbens 110 mit Hydraulikflüssigkeit aus dem hydraulischen Druckspeicher 123 beaufschlagt und der Ventilkegel 5 über die mit dem Stellkolben 110 verbundene Verbindungsstange 4 in der Öffnungsrichtung 8 bewegt wird. Bei dieser Öffnungsbewegung wird gleichzeitig eine Kraftspeicherfeder 111 gespannt, welche zwischen dem hydraulischen Stellzylinder 11 und einem an der Verbindungsstange 4 befestigten Teller 112 angeordnet ist. Zum Schließen des Turbinenventils 3 wird das Zweiwegeventil 100 durch ein entsprechendes Regelsignal RS dann so geschaltet, daß die Hydraulikflüssigkeit unter dem Stellkolben 110 über die Abflußleitung 104 in den Hydraulikflüssigkeitsbehälter 120 abfließen kann und die Federkraft der Kraftspeicherfeder 111 den Stellkolben 110 und den Ventilkegel 5 in Schließrichtung entgegengesetzt zu dem Pfeil 8 bewegt. In entsprechender Weise wird zum Schnellschließen des Turbinenventils 3 durch ein entsprechendes Schnellschlußsignal SS das Einwegventil 101 entlastet, so daß der Raum unterhalb des Stellkolbens 110 entlastet wird und die Kraftspeicherfeder 111 die schnelle Schließbewegung bewirken kann.

In dem dargestellten Funktionsschema des elektrohydraulischen Stellantriebs 1 wurde für den elektro-hydraulischen Umformer 10 eine möglichst einfache Ausführungsform gewählt. Da die im Leistungsniveau sehr klein anfallenden Regelsignale RS und Schnellschlußsignale SS für die Erzeugung von großen Stellkräften auf ein beispielsweise 10 000fach höher liegendes Leistungsniveau gebracht werden müssen, kann der elektro-hydraulische Umformer 10 auch eine oder mehrere hydraulische Verstärkungsstufen umfassen. Zur Erzeugung der benötigten hydraulischen Hilfsenergie wird über ein Stromversorgungskabel SVK elektrische Energie zugeführt, in dem Elektromotor 121 in mechanische Energie umgewandelt und schließlich durch die über eine Kupplung 124 von dem Elektromotor 121 angetriebene Flüssigkeitspumpe 122 die Hydraulikflüssigkeit aus dem Hydraulikflüssigkeitsbehälter 120 über eine Saugleitung 125 angesaugt und in den hydraulischen Druckspeicher 123 gefördert. Der max. Druck des gefüllten hydraulischen Druckspeichers 123 beträgt beispielsweise 160 bar. Um das Bauvolumen der Flüssigkeitspumpe 122 und des zugehörigen Elektromotors 121 möglichst gering zu halten, soll der von ihr erzeugte Förderstrom lediglich die im Betrieb auftretenden Leckagen der Hydraulikflüssigkeit ausgleichen und zusätzlich den hydraulischen Druckspeicher 123 langsam auffüllen können. Dies wird durch eine entsprechende Bemessung des Speichervolumens des hydraulischen Druckspeichers 123 ermöglicht. Der Bedarf an Hydraulikflüssigkeit für eine volle Öffnung des Turbinenventils 3 bzw. für im ungünstigsten Betriebsfall kurz aufeinanderfolgende Stellbewegungen muß vollständig aus dem hydraulischen Druckspeicher 123 gedeckt werden können.

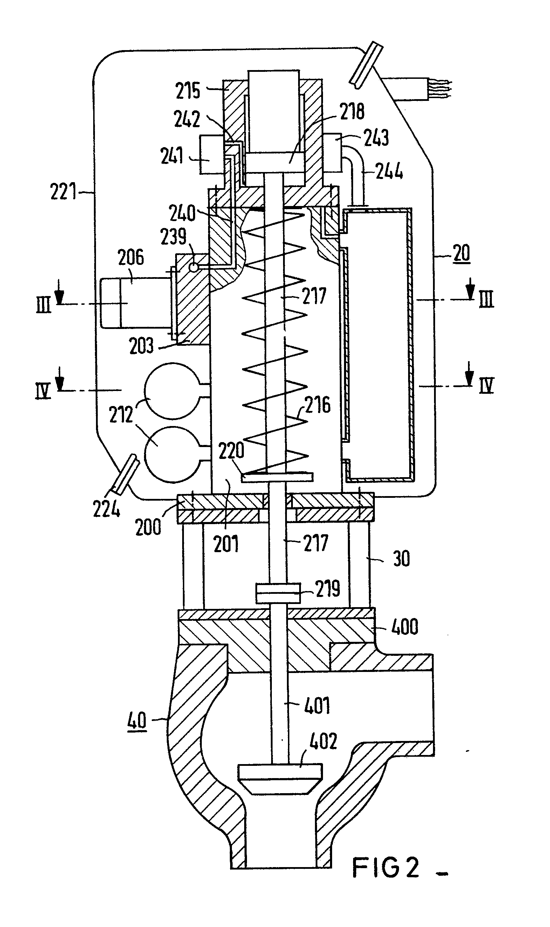

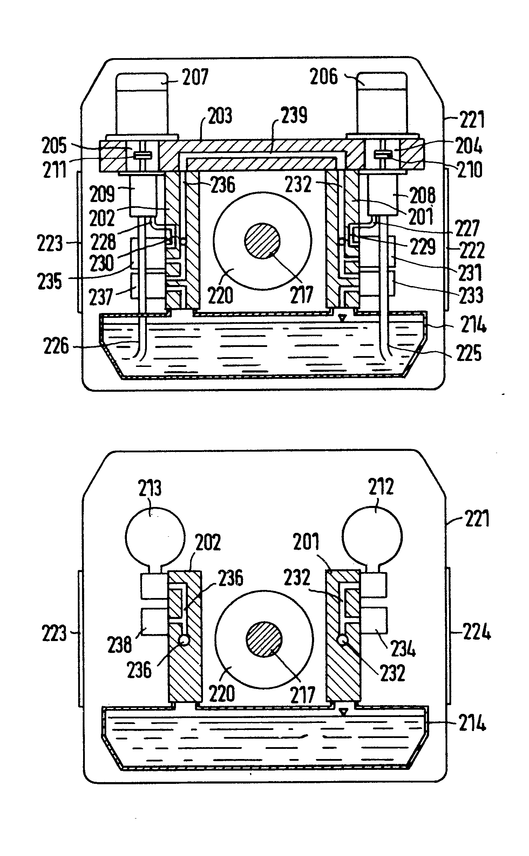

Die Fig. 2, 3 und 4 zeigen in vereinfachter Darstellung die konstruktive Ausführung eines elektrohydraulischen Stellantriebes für das Regelventil einer Dampfturbine. Der insgesamt mit 20 bezeichnete elektrohydraulische Stellantrieb ist hierbei von einem Säulengestell 30 getragen, welches seinerseits am Ventildeckel 400 des Regelventils 40 befestigt ist. Als Tragkonstruktion des elektrohydraulischen Stellantriebes 20 dienen eine an dem Säulengestell 30 befestigte Grundplatte 200, zwei senkrecht auf der Grundplatte 200 mit Abstand zueinander angeordnete Tragplatten 201 und 202 und eine stirnseitig an den Tragplatten 201 und 202 befestigte Stirnplatte 203. In die seitlich über den Tragplatten 201 und 202 überstehenden Endbereiche der Stirnplatte 203 sind Bohrungen 204 bzw. 205 eingebracht, so daß jeweils von außen ein Elektromotor 206 bzw. 207 und von innen eine Flüssigkeitspumpe 208 bzw. 209 angeflanscht werden können. Hierbei ist die zur Verbindung des Elektromotors 206 mit der zugehörigen Flüssigkeitspumpe 208 vorgesehene Kupplung 210 innerhalb der Bohrung 204 und die zur Verbindung des Elektromotors 207 mit der zugehörigen Flüssigkeitspumpe 209 vorgesehene Kupplung 211 innerhalb der Bohrung 205 angeordnet.

Im Bereich zwischen der Stirnplatte 203 und der Grundplatte 200 sind insgesamt vier hydraulische Druckspeicher angeordnet, wobei zwei hydraulische Druckspeicher 212 seitlich an die Tragplatte 201 und zwei hydraulische Druckspeicher 213 seitlich an die Tragplatte 202 angeflanscht sind. Die beiden Tragplatten 201 und 202 dienen auch für die Befestigung eines Hydraulikflüssigkeitsbehälter 214 und eines hydraulischen Stellzylinders 215, wobei der Hydraulikflüssigkeitsbehälter 214 an den der Stirnplatte 203 gegenüberliegenden Stirnseiten angebracht ist, während der hydraulische Stellzylinder 215 an den der Grundplatte 200 gegenüberliegenden Enden befestigt ist. Durch diese Raumeinteilung kann der von den beiden Tragplatten 201 und 202, der Stirnplatte 203 und dem Hydraulikflüssigkeitsbehälter 214 begrenzte Raum für die Unterbringung einer Kraftspeicherfeder 216 und der Führungsstange 217 des hydraulischen Stellzylinders 215 genutzt werden. Die Führungsstange 217 verbindet den Stellkolben 218 des hydraulischen Stellzylinders 215 über eine Kupplung 219 mit einer Ventilspindel 401, welche an ihrem Ende den Ventilkegel 402 des Regelventils 40 trägt. Die Kraftspeicherfeder 216 ist auf der Führungsstange 217 zwischen einem an der Führungsstange 217 befestigten Teller 220 und dem hydraulischen Stellzylinder 215 derart angeordnet, daß sie bei einer Öffnung des Regelventils 40 durch einen entsprechenden Hub des Stellkolbens 218 gespannt wird und nach einer Entlastung des Stellkolbens 218 das Regelventil 40 zu schließen vermag.

Zur Verkleidung des elektrohydraulischen Stellantriebes 20 ist ein an der Grundplatte 200 befestigtes Gehäuse 221 vorgesehen, welches zwei seitliche Montagedeckel 222 und 223 besitzt und durch einen diagonal verlaufenden Flansch 224 geteilt ist.

Das Gehäuse 221 hat auch die Aufgabe, bei Montage- und Wartungsarbeiten eventuell austretende Hydraulikflüssigkeit aufzufangen und somit eine mit dem unkontrollierten Austritt von Hydraulikflüssigkeit verbundene Brandgefahr von vornherein auszuschließen. Zur Abfuhr der in dem elektrohydraulischen Stellantrieb 20 entstehenden Verlustwärme kann auch über ein in der Zeichnung nicht dargestelltes Gebläse Kühlluft zwischen dem Gehäuse 221 und dem ggf. mit Kühlrippen versehenen Hydraulikflüssigkeitsbe-

-hälter 214 hindurchgeführt werden.

Die beiden Tragplatten 201 und 202 und die Stirnplatte 203 haben außer der vorstehend beschriebenen Aufgabe als Tragkonstruktion zusätzlich auch noch die Aufgabe, die daran befestigten Elemente miteinander zu verknüpfen, so daß Verbindungsleitungen weitgehend entfallen können. Die beiden Flüssigkeitspumpen 208 und 209 sind saugseitig über Saugleitungen 225 bzw. 226 an den Hydraulikflüssigkeitsbehälter 214 angeschlossen, während druckseitig über kurze Leitungsbögen 227 bzw. 228 die Verbindung mit Kanälen 229 bzw. 230 der Tragplatten 201 bzw. 202 hergestellt ist. Der in die Tragplatte 201 eingebrachte Kanal 229 führt zu einem Rückschlagventil 231, welches über einen mehrfach aufgezweigten Kanal 232 mit dem Druckbegrenzungsventil 233 der Flüssigkeitspumpe 208, den hydraulischen Druckspeichern 212 und deren Begrenzungsventilen 234 verbunden ist. In gleicher Weise führt der in die Tragplatte 202 eingebrachte Kanal 230 zu einem Rückschlagventil 235, welches über einen mehrfach aufgezweigten Kanal 236 mit dem Druckbegrenzungsventil 237 der Flüssigkeitspumpe 209, den hydraulischen Druckspeichern 213 und deren Druckbegrenzungsventilen 238 verbunden ist. Die Druckbegrenzungsventile 233 und 237 sind durch nicht näher bezeichnete Kanäle mit dem Hydraulikflüssigkeitsbehälter 214 verbunden. Auch die Druckbegrenzungsventile 234 und 238 sind durch in der Zeichnung nicht dargestellte Kanäle mit dem Hydraulikflüssigkeitsbehälter 214 verbunden. Die Querverbindung zwischen den Flüssigkeitspumpen 208 und 209 und den hydraulischen Druckspeichern 212 und 213 erfolgt durch einen in die Stirnplatte 203 eingebrachten Querverbindungskanal 239 und entsprechende Abzweigungen der in die Tragplatten 201 bzw. 202 eingebrachten Kanäle 232 bzw. 236. Der Querverbindungskanal 239 stellt auch über einen weiteren in die Tragplatte 201 eingebrachten Kanal 240 die Verbindung zwischen den hydraulischen Druckspeichern 212 und 213 und dem hydraulischen Stellzylinder 215 her. Der Kanal 240 führt zu einem ersten Modul 241 eines elektro-hydraulischen Umformers, wobei dieser erste Modul 241 über einen Kanal 242 mit dem Raum unterhalb des Stellkolbens 218 verbunden ist. Ein zweiter an dem hydraulischen Stellzylinder 215 angebrachter Modul 243 des in der Zeichnung im übrigen nicht näher dargestellten elektrohydraulischen Umformers ist über eine Abflußleitung 244 mit dem Hydraulikflüssigkeitsbehälter 214 verbunden, so daß bei einem Schließen des Regelventils 40 die Hydraulikflüssigkeit aus dem Raum unterhalb des Stellkolbens 218 in nicht näher dargestellter Weise abgeführt werden kann.

Bei dem in der Fig. 2, 3 und 4 dargestellten Ausführungsbeispiel eines elektrohydraulischen Stellantriebes wird durch die tragende und gleichzeitig verbindende Funktion der aus Platten bestehenden Tragkonstruktion eine äußerst kompakte Bauweise des integrierten Antriebsblocks ermöglicht, wobei die Wartungsfreundlichkeit durch die übersichtliche und leicht zugängliche Anordnung der einzelnen Bauteile gewährleistet ist. Durch die hinsichtlich der Flüssigkeitspumpen und der hydraulischen Druckspeicher symmetrisch redundante Ausgestaltung des Antriebsblockes wird außerdem eine hohe Betriebssicherheit erzielt.

**Patentansprüche**

1. Elektrohydraulischer Stellantrieb (1, 20) für Turbinenventile (3, 40), insbesondere für Regel-Schnellschluß- und Umleitventile von Dampfturbinen, mit einer elektrischen Ansteuerung, einem elektro-hydraulischen Umformer (10), einem hydraulischen Stellzylinder (11, 215), dessen Stellkolben (110, 218) mit der Ventilspindel (4, 217) verbunden und in Schließrichtung durch die Federkraft einer Kraftspeicherfeder (111, 216) belastet ist und mit einem hydraulischen Versorgungssystem, welches eine aus einem Hydraulikflüssigkeitsbehälter (120, 214) gespeiste und von einem Elektromotor (121; 206, 207) angetriebene Flüssigkeitspumpe (122; 208, 209) und einen druckseitig an die Flüssigkeitspumpe angeschlossenen hydraulischen Druckspeicher (123; 212, 213) umfaßt, dadurch gekennzeichnet, daß der elektrohydraulische Umformer (10), der hydraulische Stellzylinder (215) und das hydraulische Versorgungssystem an einer am Ventilgehäuse angeordneten Tragkonstruktion (200—203) befestigt sind, daß die Tragkonstruktion zwei parallel angeordnete und die Kraftspeicherfeder (216) zwischen sich aufnehmende Tragplatten (201, 202) umfaßt und daß die an den Tragplatten (201, 202) befestigten Bauelemente zumindest teilweise durch in die Tragplatten eingebrachte Kanäle (232, 236) verbunden sind.

2. Elektrohydraulischer Stellantrieb nach Anspruch 1, dadurch gekennzeichnet, daß die Tragkonstruktion zusätzlich eine stirnseitig an den Tragplatten (201, 202) befestigte Stirnplatte (203) umfaßt und daß in die Stirnplatte (203) ein Querverbindungskanal (239) eingebracht ist.

3. Elektrohydraulischer Stellantrieb nach Anspruch 2, dadurch gekennzeichnet, daß an den seitlich über die Tragplatten (201, 202) hinausragende Bereichen der Stirnplatte (203) jeweils eine von einem Elektromotor (206, 207) angetriebene Flüssigkeitspumpe (208, 209) befestigt ist.

4. Elektrohydraulischer Stellantrieb nach Anspruch 3, dadurch gekennzeichnet, daß die Flüssigkeitspumpen (208, 209) an der den Tragplatten (201, 202) zugewandten Seite der Stirnplatte (203) befestigt sind und daß die Elektromotoren (206, 207) an der den Tragplatten (201, 202) abgewandten Seite der Stirnplatte (203) befestigt sind.

5. Elektrohydraulischer Stellantrieb nach Anspruch 2, dadurch gekennzeichnet, daß der Hydraulikflüssigkeitsbehälter (214) an den der Stirnplatte (203) gegenüberliegenden Stirnseiten der Tragplatten (201, 202) angebracht ist.

6. Elektrohydraulischer Stellantrieb nach Anspruch 2, dadurch gekennzeichnet, daß auf der der Stirnplatte (203) zugewandten Seite an jeder Tragplatte (201, 202) mindestens ein hydraulischer Druckspeicher (212, 213) befestigt ist.

7. Elektrohydraulischer Stellantrieb nach einem der vorhergehenden Ansprüche, dadurch gekennzeichnet, daß die Tragkonstruktion über ein Säulengestell (30) mit dem Ventilgehäuse verbunden ist.

**Claims**

1. Electro-hydraulic actuator (1, 20) for turbine valves (3, 40), in particular for regulating, quick-closing and diverting valves of steam turbines, comprising an electrical drive system, an electro-hydraulic converter (10), a hydraulic control cylinder (11, 215) whose control piston (110, 218) is connected to the valve spindle (4, 217) and is subject to the spring force of an energy store spring (111, 216) in the direction of closure, and comprising a hydraulic supply system which has a liquid pump (122, 208, 209) fed from a hydraulic liquid container (120, 214) and driven by an electric motor (121; 206, 207) and has a hydraulic pressure store (123; 212, 213) connceted at the pressure side to the liquid pump, characterised in that the electro-hydraulic converter (10), the hydraulic control cylinder (215) and the hydraulic supply system are attached to a support construction (200, 203) arranged on the valve housing, that the support construction comprises two support plates (201, 202) which are arranged in parallel and accommodate the energy store spring (216) between them, and that the components which are attached to the support plates (201, 202) are at least partially connected by means of channels (232, 236) introduced into the support plates.

2. Electro-hydraulic actuator as claimed in claim 1, characterised in that the support construction additionally comprises an end plate (203) which is attached at its ends to the support plates (201, 202) and that a transverse connection channel (239) is introduced into the end plate (203).

3. Electro-hydraulic actuator as claimed in claim 2, characterised in that a liquid pump (208, 209) driven by an electric motor (206, 207) is in each case attached to those regions of the end plate (203) which project laterally beyond the support plates (201, 202).

4. Electro-hydraulic actuator as claimed in claim 3, characterised in that the liquid pumps (208, 209) are attached to that side of the end plate (203) which faces towards the support plates (201, 202), and that the electric motors (206, 207) are attached to that side of the end plate which faces away from the support plates (201, 202).

5. Electro-hydraulic actuator as claimed in claim 2, characterised in that the hydraulic liquid container (214) is arranged at those end sides of the support plates (201, 202) which are opposite the end plate (203).

6. Electro-hydraulic actuator as claimed in claim 2, characterised in that on the side facing towards the end plate (203), at least one hydraulic pressure store (212, 213) is attached to each support plate (201, 202).

7. Electro-hydraulic actuator as claimed in one of the preceding claims, characterised in that the support construction is connected to the valve housing via a column mount (30).

**Revendications**

1. Servomoteur électrohydraulique (1, 20) pour des soupapes de turbine (3, 40), notamment pour des soupapes régulatrices à fermeture rapide et de dérivation de turbines à vapeur, qui comporte une commande électrique, in convertisseur électrohydraulique (10), un cylindre hydraulique de réglage (11, 215) dont le piston de réglage (110, 218) est couplé à la tige de soupape (4, 217) et est chargé dans le sens de fermeture par la force élastique d'un ressort d'accumulation d'énergie (111, 216) et un système d'alimentation hydraulique qui comprend une pompe hydraulique (122; 208, 209) alimentée à partir d'un réservoir de liquide hydraulique (120, 213) et entraînée par un moteur électrique (121; 206, 207), et un accumulateur hydraulique (123; 212, 213) raccordé à la pompe hydraulique côté refoulement, caractérisé par le fait que le convertisseur électrohydraulique (10), le cylindre hydraulique de réglage (215) et le système d'alimentation hydraulique sont fixés sur un système de support (200 – 203) disposé sur le boîtier de la soupape, que le système de support comporte deux plaques-supports (201, 202) disposées parallèlement et recevant le ressort d'accumulation d'énergie (216) entre elles, et que les éléments constitutifs fixés sur les plaques-supports (201, 202) sont couplés au moins partiellement par des canaux (232, 236) ménagés dans les plaques-supports.

2. Servomoteur électrohydraulique suivant la revendication 1, caractérisé par le fait que le système de support comporte en outre une plaque frontale (203) fixée frontalement sur les plaques-supports (201, 202), et qu'un canal de couplage transversal (239) est ménagé dans la plaque frontale (203).

3. Servomoteur électrohydraulique suivant la revendication 2, caractérisé par le fait que sur les régions de la plaque frontale (203) qui dépassent latéralement par rapport aux plaques-supports (201, 202), est respectivement fixée une pompe hydraulique (208, 209) entraînée par un moteur électrique (206, 207).

4. Servomoteur électrohydraulique suivant la revendication 3, caractérisé par le fait que les pompes hydrauliques (208, 209) sont fixées sur le côté de la plaque frontale (203) qui est tourné vers les plaques-supports (201, 202), et que les moteurs électriques (206, 207) sont fixés sur le côté de la plaque frontale (203) qui est opposé aux plaques-supports (201, 202).

5. Servomoteur électrohydraulique suivant la revendication 2, caractérisé par le fait que le réservoir de liquide hydraulique (214) est disposé sur les faces frontales des plaques-supports (201, 202) qui sont opposées à la plaque frontale (203).

6. Servomoteur électrohydraulique suivant la revendication 2, caractérisé par le fait qu'au moins un accumulateur hydraulique (212, 213) est fixé sur chaque plaque-support (201, 202), du côté tourné vers la plaque frontale (203).

7. Servomoteur électrohydraulique suivant l'une des revendications précédentes, caractérisé par le fait que le système de support est couplé au boîtier de soupape par l'intermédiaire d'un bâti à colonne (30).

FIG 1

FIG 2